(19) Europäisches Patentamt
European Patent Office
Office européen des brevets

(11) **EP 2 817 656 B1**

(12) **EUROPÄISCHE PATENTSCHRIFT**

(45) Veröffentlichungstag und Bekanntmachung des Hinweises auf die Patenterteilung:
**11.12.2019 Patentblatt 2019/50**

(21) Anmeldenummer: **13706468.9**

(22) Anmeldetag: **19.02.2013**

(51) Int Cl.:
*G01S 15/93* *(2006.01)*          *G01S 7/527* *(2006.01)*
*G01S 15/42* *(2006.01)*          *G01S 15/87* *(2006.01)*

(86) Internationale Anmeldenummer:
**PCT/EP2013/053278**

(87) Internationale Veröffentlichungsnummer:
**WO 2013/124272 (29.08.2013 Gazette 2013/35)**

(54) **VERFAHREN ZUR LOKALISIERUNG VON OBJEKTEN MITTELS ULTRASCHALL**

METHOD FOR LOCATING OBJECTS USING ULTRASOUND

PROCÉDÉ DE LOCALISATION D'OBJETS PAR ULTRA-SONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.02.2012 DE 102012202582**

(43) Veröffentlichungstag der Anmeldung:
**31.12.2014 Patentblatt 2015/01**

(73) Patentinhaber: **Robert Bosch GmbH**
**70442 Stuttgart (DE)**

(72) Erfinder: **LOHMANN, Timo**
**80809 München (DE)**

(56) Entgegenhaltungen:
**WO-A1-2009/059279     DE-A1-102010 027 972**

- **PETROS BOUFOUNOS: "Compressive Sensing for over-the-air ultrasound", ACOUSTICS, SPEECH AND SIGNAL PROCESSING (ICASSP), 2011 IEEE INTERNATIONAL CONFERENCE ON, IEEE, 22. Mai 2011 (2011-05-22), Seiten 5972-5975, XP032002047, DOI: 10.1109/ICASSP.2011.5947722 ISBN: 978-1-4577-0538-0**
- **CETIN M ET AL: "A Sparse Signal Reconstruction Perspective for Source Localization With Sensor Arrays", IEEE TRANSACTIONS ON SIGNAL PROCESSING, IEEE SERVICE CENTER, NEW YORK, NY, US, Bd. 53, Nr. 8, 1. August 2005 (2005-08-01), Seiten 3010-3022, XP011136485, ISSN: 1053-587X, DOI: 10.1109/TSP.2005.850882 in der Anmeldung erwähnt**

EP 2 817 656 B1

## Beschreibung

Stand der Technik

Die Erfindung bezieht sich auf ein Verfahren zur Lokalisierung von Objekten mittels Ultraschall sowie auf eine Vorrichtung zur Durchführung des Verfahrens.

Moderne Fahrzeuge sind mit einer Vielzahl von Fahrassistenzsystemen ausgestattet. Diese Assistenzsysteme unterstützen den Fahrer bei der Durchführung verschiedener Fahrmanöver. Diese Fahrassistenzsysteme umfassen beispielsweise Einparkhilfen, welche selbstständig Parklücken erkennen und das Fahrzeug in die Parklücke führen können. Ein weiteres Beispiel sind Rückfahrassistenten, die den Fahrweg während des Rückwärtsfahrens auf Hindernisse überprüfen. Zur Durchführung ihrer Aufgaben müssen die genannten Systeme mithilfe verschiedener Sensoren ein möglichst genaues Abbild der Umgebung des Fahrzeugs erfassen. Üblicherweise kommen dafür Ultraschallsensoren zum Einsatz. Dabei wird von einem Ultraschallsender ein Signal ausgesendet, dieses Ultraschallsignal wird von einem Hindernis reflektiert und von einem Empfänger am Fahrzeug wieder registriert. Aus der Zeit, die zwischen Aussenden und Empfang des Signals vergangen ist, und der bekannten Schallgeschwindigkeit in Luft kann der Abstand zwischen dem Fahrzeug und dem Reflektor berechnet werden. Da die Schallausbreitung im Allgemeinen nicht gerichtet erfolgt, lässt sich die Richtung, aus der das Echo einfällt, nicht so einfach bestimmen.

Aus der DE 10 2004 050794 A1 ist ein Verfahren und eine Vorrichtung zur Umfelderfassung mittels Ultraschallwellen bekannt. Die Vorrichtung umfasst einen als Array ausgeführten Ultraschallsender, welcher aus vielen einzelnen Ultraschallgebern aufgebaut ist. Durch phasenverschobenes Ansteuern der einzelnen Ultraschallgeber lässt sich durch Ausnutzung von Interferenz die Richtwirkung der Schallabstrahlung verbessern.

Aus der US 7,834,795 ist ein Verfahren und eine Vorrichtung zur Bestimmung der Einfallsrichtung eines oder mehrerer Signale bekannt. Die Vorrichtung umfasst eine Vielzahl von Sensoren, die beispielsweise in Form eines Arrays angeordnet sind. Die Ausgangssignale der Sensoren werden jeweils mit einem pseudozufälligen Signal gemischt. Anschließend werden die gemischten Signale der Sensoren analog aufsummiert und über einen Analog-Digitalwandler digitalisiert. Dabei ist die Rate, mit der das pseudozufällige Signal generiert wird, identisch mit der Abtastrate des Analog-Digitalwandlers. In einer nachgeschalteten Signalverarbeitung werden die Anzahl der einfallenden Signale und deren Richtung mithilfe eines Compressed Sensing Algorithmus bestimmt.

Aus US 2010/02 65799 A1 ist ein Verfahren bekannt, bei dem Signale von vielen drahtlos angebundenen Sensoren, die beispielsweise auch auf einer gemeinsamen Grundplatte angeordnet sein können, für die Bestimmung der Anzahl und Richtung einfallender Signale über die Compressed Sensing Methode verwendet werden. In einer Ausführungsform der Vorrichtung werden die Sensorsignale mit jeweils einem Analog-Digitalwandler digitalisiert und die weiteren Verfahrensschritte, wie das Mischen mit einem pseudozufälligen Signal, werden anschließend digital durchgeführt.

DE 102010027972 A1 offenbart ein Verfahren und eine Vorrichtung zur Abstand- und Einfallsrichtungsbestimmung eines Objekt umfassend einen Ultraschallsender und zwei Empfänger, wobei ein Beamforming Algorithmus verwendet wird.

Offenbarung der Erfindung

Es wird ein Verfahren zur Lokalisierung von Objekten mittels Ultraschall vorgeschlagen, welches folgende Schritte umfasst:

a) Aussenden mindestens eines Ultraschallpulses,
b) Erfassen von Ultraschallechos der Ultraschallpulse mit mindestens zwei Empfängern,
c) Wandlung der von jedem Empfänger aus den Ultraschallechos erzeugten analogen Signale in digitale Signale,
d) Aufsummieren der digitalen Signale zu einem Ausgangssignal,
e) Multiplizieren des Ausgangssignals mit einer Zufallsmatrix,
f) Ermitteln der Einfallsrichtung der Ultraschallechos aus dem multiplizierten Ausgangssignal unter Verwendung von Compressed Sensing,
g) Speichern der ermittelten Einfallsrichtungen in einer Umgebungskarte, dadurch gekennzeichnet, dass bei der Einfallsrichtung der Ultraschallechos zusätzlich ein Beamforming-Algorithmus verwendet wird.

Im ersten Verfahrensschritt a) wird mindestens ein Ultraschallpuls mit einem Sender ausgesendet. Dabei ist es bevorzugt, dass das Aussenden des Ultraschallpulses ungerichtet erfolgt. Der Ultraschallpuls breitet sich mit Schallgeschwindigkeit aus und trifft dabei gegebenenfalls auf Hindernisse. Von solchen Hindernissen wird der Ultraschallpuls teilweise reflektiert und die entstehenden Ultraschallechos der Ultraschallpulse werden mit mindestens zwei Empfängern im zweiten Schritt b) des Verfahrens erfasst.

Im dritten Schritt c) des Verfahrens werden die von den Empfängern aus den Ultraschallechos erzeugten analogen Signale mithilfe von Analog-Digitalwandlern in digitale Signale umgesetzt. Dabei ist jeder Empfänger mit einem eigenen Analog-Digitalwandler verbunden. Die Weiterverarbeitung der Signale erfolgt rein digital mithilfe eines geeigneten Steuergeräts oder Computers.

Im vierten Verfahrensschritt d) werden die digitalen Signale zu einem gemeinsamen Ausgangssignal aufsummiert. Anschließend wird im Verfahrensschritt e) das soeben erhaltene Ausgangssignal mit einer Zufallsmatrix multipliziert. Die dafür notwendigen Zufallszahlen können beispielsweise über einen Zufallszahlengenerator oder durch eine Funktion zur Erzeugung pseudozufälliger Zahlen bereitgestellt werden.

Im Schritt f) des Verfahrens werden die Einfallsrichtungen der Ultraschallechos aus dem multiplizierten Ausgangssignal unter Verwendung von Compressed Sensing ermittelt. Compressed Sensing ist eine Methode, "dünn besetzte" Lösungen unterbestimmter Gleichungssysteme zu errechnen. Dünn besetzt bedeutet in diesem Zusammenhang, dass in einer Darstellung eine große Mehrheit von Lösungen 0 ist. Eine Beschreibung der Methode sowie ein Vergleich verschiedener Algorithmen kann beispielsweise der Veröffentlichung "Sparse Signal Reconstruction Perspective for Source Localization with Sensor Arrays," von Dmitry M. Malioutov et al., IEEE Transactions on Signal Processing, vol. 53-8, part II, 3010-3022, (2005) entnommen werden.

Im Folgenden wird dies anhand der einfallenden Ultraschallechos näher erläutert. Die Signale der einfallenden Ultraschallechos liegen nach der Analog-Digitalwandlung als diskretes, reell wertiges Zeitsignal $\mathbf{x}$ vor. Wurden bei der Analog-Digitalwandlung beispielsweise N Abtastpunkte ermittelt lässt sich das Zeitsignal als ein Vektor bzw. als eine Matrix mit N Zeilen und einer Spalte darstellen. In der Zeitbasis ist der Vektor $\mathbf{x}$ nicht dünn besetzt, das heißt in fast allen Zeilen des Vektors $\mathbf{x}$ steht ein von 0 verschiedener Wert. Der Vektor $\mathbf{x}$ kann jedoch auch in einer anderen Basis als eine Linearkombination von N Basisfunktionen mit den zugehörigen Koeffizienten $\mathbf{s}$ dargestellt werden. Die Basisfunktionen können als Matrix $\Psi$ der Größe (N x N) und die zugehörigen Koeffizienten s als Vektor bzw. Matrix der Größe (N x 1) dargestellt werden:

$$\mathbf{x} = \Psi \mathbf{s}.$$

Wird die Basis $\Psi$ geeignet gewählt, enthält der Vektor $\mathbf{s}$ nur wenige Zeilen, die von 0 abweichende Werte enthalten. Eine solche geeignete Basis wird für Verfahren zur Lokalisierung von Objekten mittels Ultraschall durch ebene Wellen gebildet, die aus verschiedenen Richtungen auf die mindestens zwei Empfänger treffen. Dabei wird jeder Richtung ein Basisvektor zugeordnet. Da in der Regel nur aus wenigen Richtungen Echos auf die Empfänger treffen, sind die meisten Zeilen des Koeffizientenvektors $\mathbf{s}$ gleich 0. Wird der ausgesendete Ultraschallpuls beispielsweise von zwei Objekten reflektiert, so treffen zwei Ultraschallechos aus zwei Richtungen auf die mindestens zwei Empfänger. Zur Darstellung des Ausgangssignals in der Basis $\Psi$ werden demnach nur zwei Basisvektoren benötigt und nur zwei Zeilen des Koeffizientenvektors $\mathbf{s}$ enthalten einen von 0 verschiedenen Wert.

Im Kontext von Compressed Sensing wird das Signal $\mathbf{x}$ als K-sparse bezeichnet, wenn es nur aus einer Linearkombination von nur K Basisvektoren besteht und die restlichen (N-K) Koeffizienten 0 sind. Dies wird beim Compressed Sensing ausgenutzt, sodass die Anzahl der Messungen M, die für eine vollständige Rekonstruktion des Signals $\mathbf{x}$ benötigt werden, deutlich kleiner ist, als die Zahl N der Basisfunktionen insgesamt. Für eine vollständige Rekonstruktion ist es ausreichend, wenn die Anzahl an Messungen M mindestens der Anzahl der von 0 verschiedenen Koeffizienten, also M $\geq$ K entspricht. Dabei wird im Kontext von Compressed Sensing als "Messung" ein Produkt zwischen einer Matrix $\Phi$ und dem Signal x verstanden:

$$\mathbf{y} = \Phi\mathbf{x} = \Phi\Psi\mathbf{s} = \Theta\mathbf{s}$$

Dabei wird der Vektor $\mathbf{y}$ als Messung und $\Phi$ als Messmatrix bezeichnet. Zudem gilt für die Matrix $\Theta$ die Beziehung

$$\Theta = \Phi\Psi$$

und die Messmatrix $\Phi$ wird mit Zufallszahlen gebildet. Durch die Wahl der Messmatrix als (M x N) Matrix mit stochastisch normal verteilten Einträgen genügt $\Phi$ den Anforderungen an eine stabile Messmatrix für die Compressed Sensing Methode. Zur Rekonstruktion des ursprünglichen Signals, welches durch die Basis $\Psi$ und den Koeffizientenvektor $\mathbf{s}$ definiert ist, muss der Koeffizientenvektor $\mathbf{s}$ mit einem geeigneten Rekonstruktionsalgorithmus gewonnen werden. Eine optimale K-sparse Lösung (perfekte Rekonstruktion) wird nur durch die Minimierung der $L_1$-Norm erhalten

$$\hat{s} = \min \left\| \mathbf{s}^{'} \right\|_1$$

sodass folgendes Gleichungssystem erfüllt wird:

$$\mathbf{y} = \Theta \, \mathbf{s}^{'}.$$

Dabei ist $\hat{s}$ die $L_1$-Norm des rekonstruierten Koeffizientenvektors $\mathbf{s'}$ und ist definiert als

$$\hat{s} = \sum s_i,$$

wobei i eine Zählvariable ist und von 1 bis N läuft und die $s_i$ die Komponenten des rekonstruierten Koeffizientenvektors $\mathbf{s'}$ sind.

Ein geeigneter Algorithmus zur Minimierung der $L_1$-Norm ist der $L_1$SVD-Algorithmus. Dieser Algorithmus wird in der Veröffentlichung "Sparse Signal Reconstruction Perspective for Source Localization with Sensor Arrays," Dmitry M. Malioutov et al., IEEE Transactions on Signal Processing, vol. 53-8, part II, 3010-3022, (2005) vorgestellt. Der Koeffizientenvektor **s'**, der Ergebnis der Rekonstruktion ist, ist in der Basis der aus verschiedenen Richtungen einfallenden Ebenen Wellen gegeben. Das heißt, jede Zeile aus dem rekonstruierten Koeffizientenvekor **s'** die einen Wert ≠ 0 aufweist, steht für ein eingegangenes Ultraschallecho. Die Einfallsrichtung dieses Ultraschallechos entspricht der Richtung der ebenen Welle des dazugehörenden Basisvektors. Durch Erhöhen der Anzahl der verwendeten Basisvektoren lässt sich die Auflösung der Objektlokalisierung verbessern.

Die genaue Anordnung der verwendeten Empfänger ist dabei nicht von grundlegender Bedeutung. Durch die verbesserte Signalverarbeitung kann die Anzahl der verwendeten Empfänger gegenüber konventionellen Verfahren reduziert werden. Das heißt, es werden nicht mehr alle Empfänger gegenüber einer konventionellen Anordnung für eine gegebene Lokalisationsgenauigkeit benötigt.

Im letzten Schritt g) des Verfahrens werden die ermittelten Einfallsrichtungen in einer Umgebungskarte gespeichert. Die Umgebungskarte kann beispielsweise für ein Fahrassistenzsystem verwendet werden.

Bei der Ermittlung der Einfallsrichtung der Ultraschallechos wird zusätzlich ein Beamforming-Algo-rithmus verwendet Geeignete Beamforming-Algorith-men umfassen beispielsweise Delay- and-Sum-Filtering, Space-Time-Filtering, Minimum Variance Beamformer, Capons-Methode und/oder den MUSIC-Algorithmus. Diese Algorithmen und Methoden sind im Stand der Technik bekannt und werden in verschiedenen Veröffentlichungen diskutiert. Beispielsweise sei auf die folgenden Veröffentlichungen verwiesen:

R. Schmidt, IEEE Trans. Antennas Propag. 34, 276-280 (1986) "Multiple emitter location and signal parameter estimation";
Petre Stoica et al., Circuits, Systems, and Signal Processing Vol 14, Number 6 (1995), 749-770, "Study of Capon method for array signal processing";
Robert G. Lorenz, IEEE TRANSACTIONS ON SIGNAL PROCESSING, VOL. 53 (2005), 1684-1696, "Robust Minimum Variance Beamforming";
Noel Cressie et al. Encyclopedia of Environmetrics, Vol 4 (2002), 2045-2049, "Space-time Kalman filter";
Melvin J. Hinich, J. Acoust. Soc. Am Vol 64 (1978), 792-794, "Processing spatially aliasedarrays".

Ein Auswerten der Signallaufzeit also der Zeit vom Aussenden des Ultraschallpulses bis zum Eintreffen eines Echos ist weiterhin möglich. Dementsprechend kann im Verfahrensschritt f) zusätzlich die Entfernung von Objekten, an denen die Ultraschallpulse reflektiert wurden, durch Messung der Schalllaufzeit ermittelt werden. Aus der Kombination aus Einfallsrichtung und Entfernung lässt sich das Objekt, an dem der Ultraschallpuls reflektiert wurde, in der Umgebung lokalisieren. Auch die Objektentfernung wird demnach in die Umgebungskarte mit eingetragen.

In einer Ausführungsform der Erfindung sind die mindestens zwei Empfänger als eindimensionales oder zweidimensionales Array angeordnet. Da für das Compressed Sensing die genaue Anordnung der Empfänger nicht von grundlegender Bedeutung ist, kann das Array gegenüber konventionellen Lösungen mit einer geringeren Anzahl von Empfängern ausgerüstet werden. Dies ermöglicht es, das Array sehr kompakt auszuführen.

Des Weiteren ist es denkbar, die Empfänger des eindimensionalen oder zweidimensionalen Arrays in zwei oder mehr Gruppen zu unterteilen. Die unterschiedlichen Gruppen können beispielsweise in verschiedene Richtungen ausgerichtet werden oder für den Empfang unterschiedlicher digital codierter Informationen verwendet werden.

Ein weiterer Aspekt der Erfindung ist die Bereitstellung einer Vorrichtung zur Durchführung des soeben beschriebenen Verfahrens. Die erfindungsgemäße Vorrichtung umfasst mindestens einen Sender zum Aussenden von Ultraschallpulsen, mindestens zwei Empfänger zum Empfangen von Ultraschallechos sowie ein Steuergerät, wobei die Vorrichtung für jeden Empfänger einen Analog-Digitalwandler umfasst und wobei das Steuergerät zur Ermittlung der Einfallsrichtung der Ultraschallechos mittels Compressed Sensing eingerichtet ist.

Die mindestens zwei Empfänger sind einzeln oder als eindimensionales oder zweidimensionales Array ausgeführt. Da für die Durchführung des Compressed Sensing Algorithmus die genaue Anordnung der Empfänger nicht von grundlegender Bedeutung ist, sind verschiedenste Ausgestaltungen des Arrays denkbar. Beispielsweise kann das Array in Form eines Rasters oder eines Ringes ausgestaltet werden. Im Vergleich zur konventionellen Signalverarbeitung kann die Besetzung des Arrays dabei reduziert werden, das heißt es werden nicht mehr alle Sensoren gegenüber einer konventionellen Anordnung für eine gegebene Lokalisierungsgenauigkeit benötigt. Ebenfalls denkbar ist die Aufteilung der einzelnen Empfänger eines Arrays in zwei oder mehr Gruppen. Die Empfänger der einzelnen Gruppen können dabei beispielsweise in verschiedene Richtungen ausgerichtet sein oder für den Empfang unterschiedlich digital codierter Informationen verwendet werden.

In einer Ausführungsform der Vorrichtung sind der Sender und die Empfänger bauteilidentisch ausgeführt. Dabei können die einzelnen Ultraschallwandler eines Arrays verwendet werden, um durch Ausnutzung von Interferenzeffekten die Ausbreitungscharakteristik des ausgesendeten Ultraschallpulses zu beeinflussen. Dadurch lässt sich je nach den benötigten Anforderungen entweder ein ungerichteter oder in eine bestimmte Richtung gerichteter Ultraschallpuls erzeugen.

Die Analog-Digitalwandler der Vorrichtung können je nach Ausführungsform entweder direkt an den Empfängern oder im Steuergerät angeordnet sein.

Um die Auswertealgorithmen zur Bestimmung der Einfallsrichtung durchführen zu können, wird das Steuergerät mit ausreichend Rechenkapazität versehen. Je nach Ausführungsform umfasst das Steuergerät hierzu einen digitalen Signalprozessor (DSP).

**Kurze Beschreibung der Zeichnungen**

Ausführungsbeispiele der Erfindung sind in den Zeichnungen dargestellt und in der nachfolgenden Beschreibung näher erläutert.

Figur 1 zeigt die Front eines Fahrzeugs mit der erfindungsgemäßen Vorrichtung zur Lokalisierung von Objekten,

Figuren 2a, b und c zeigen verschiedene Ausgestaltungsmöglichkeiten eines zweidimensionalen Empfängerarrays,

Figur 3 zeigt eine schematische Darstellung der erfindungsgemäßen Vorrichtung zur Lokalisierung von Objekten mittels Ultraschall,

Figur 4 zeigt ein Diagramm in dem die Einfallsrichtungen zweier Ultraschallechos mit verschiedenen Verfahren bestimmt worden sind.

**Ausführungsformen der Erfindung**

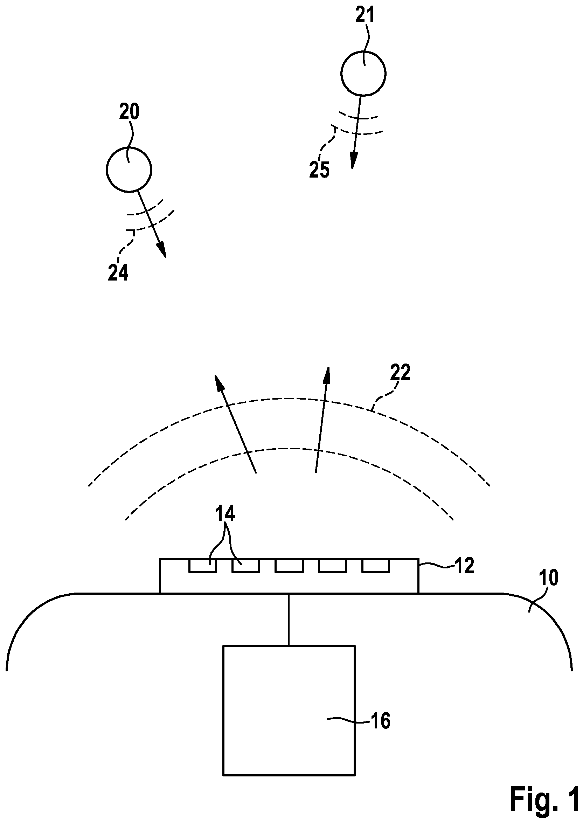

Figur 1 zeigt die Front eines Fahrzeugs welches die Umgebung mithilfe der erfindungsgemäßen Vorrichtung abtastet.

Ein Fahrzeug umfasst in seiner Front 10 ein Ultraschallarray 12, auf dem eine Vielzahl von Sendern und Empfängern 14 angeordnet sind. Sender und Empfänger sind in der dargestellten Ausführungsform bauteilidentisch ausgeführt, in weiteren Ausführungsformen können die Sender und Empfänger auch als getrennte Bauteile ausgeführt werden. Das Ultraschallarray 12 und damit die einzelnen Sender und Empfänger 14 sind mit einem Steuergerät 16 verbunden, welches den Messprozess steuert und Messergebnisse auswertet. In dem in Figur 1 dargestellten Beispiel wird durch das Ultraschallarray 12 ein ungerichteter Ultraschallpuls 22 ausgesendet. Der Ultraschallpuls 22 trifft auf Hindernisse 20, 21 und wird teilweise reflektiert. Der reflektierte Ultraschallpuls läuft als Ultraschallechos 24, 25 zurück in Richtung des Ultraschallarrays 12 wo die Ultraschallechos 24, 25 von den Sendern und Empfängern 14 erfasst werden. Von den Sendern und Empfängern 14 werden die Ultraschallechos 24, 25 in analoge Signale umgewandelt und an das Steuergerät 16 übermittelt. Im Steuergerät 16 findet eine Analog-Digitalwandlung und anschließend eine Auswertung der Signale statt. In einer weiteren Ausführungsform werden die analogen Signale der Sender und Empfänger 14 bereits im Ultraschallarray 12 über Analog-Digitalwandler digitalisiert und als digitales Signal dem Steuergerät 16 zur Auswertung zugeführt.

Bei der Auswertung der Signale kommt zur Bestimmung der Einfallsrichtung die Compressed Sensing Methode zum Einsatz, die gegebenenfalls durch den Einsatz weiterer Algorithmen unterstützt wird. Die Entfernung der reflektierenden Hindernisse 20, 21 wird aus der Laufzeit der Ultraschallechos 24, 25 wird bestimmt. Über die Einfallsrichtung und die Entfernung werden die Hindernisse 20, 21 lokalisiert. Die ermittelten Hindernisse werden anschließend in einer Umgebungskarte eingetragen, die nun zur Verwendung beispielsweise in einem Fahrassistenzsystem zur Verfügung steht.

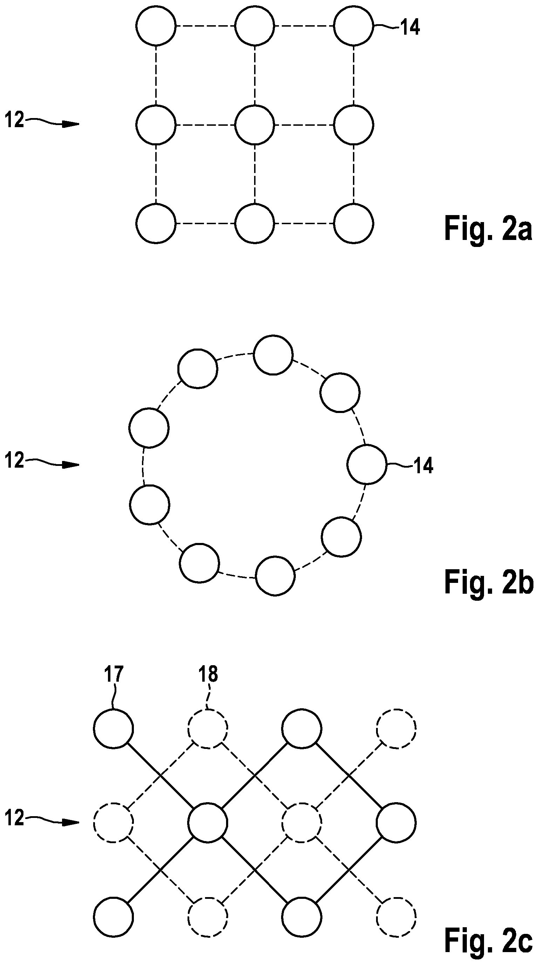

Die Figuren 2 a -c zeigen verschiedene Ausgestaltungen eines zweidimensionalen Empfängerarrays.

In Figur 2 a ist ein zweidimensionales Ultraschallarray 12 dargestellt welches als Raster ausgeführt ist. Das Raster umfasst horizontale und vertikale Linien wobei sich an den Überlappungspunkten der Linien jeweils ein Empfänger 14 befindet. Je nach Ausführungsform kann ein solches Ultraschallarray 12 zumindest teilweise auch aus Sendern aufgebaut werden oder es werden Sender und Empfänger bauteilidentisch ausgeführt.

In Figur 2b ist ein als Ring ausgeführtes Array 12 dargestellt. Mehrere Sender und Empfänger 14 sind dabei ringförmig angeordnet.

In Figur 2c ist ein Ultraschallarray 12 dargestellt, welches in zwei Untergruppen unterteilt ist. Die Sender und Empfänger 17 der ersten Gruppe sowie die Sender und Empfänger 18 der zweiten Gruppe sind dabei rasterförmig angeordnet, wobei die einzelnen Sender und Empfänger 17, 18 jeweils auf den Schnittpunkten von sich kreuzenden diagonalen Linien angeordnet sind. Dabei sind die beiden Gruppen der Sensoren versetzt zueinander angeordnet, sodass sich Sender und Empfänger der ersten Gruppe 17 mit Sendern und Empfängern der zweiten Gruppe 18 abwechseln.

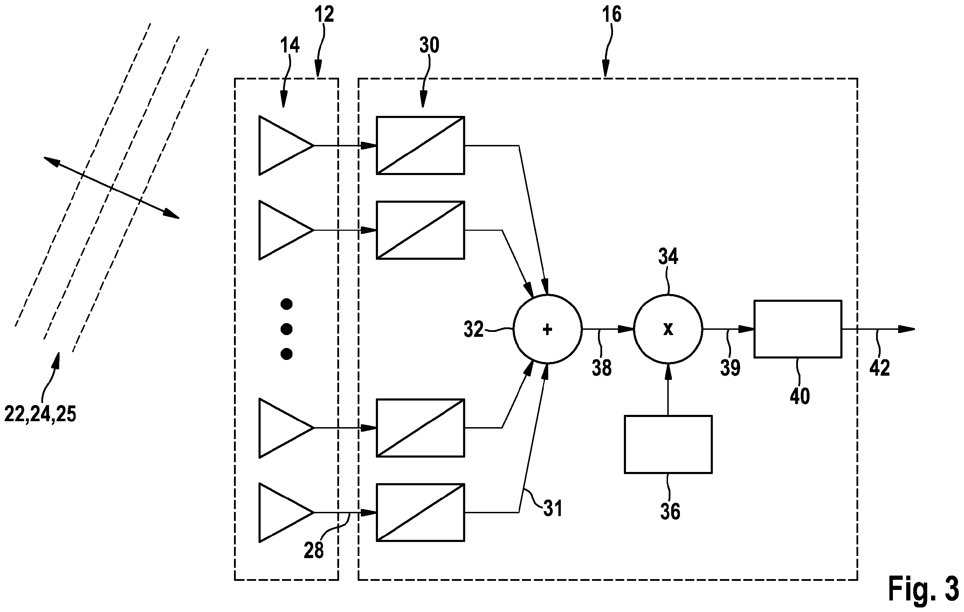

Figur 3 zeigt eine schematische Darstellung der erfindungsgemäßen Vorrichtung zur Lokalisierung von Objekten mittels Ultraschall.

In Figur 3 ist ein Ultraschallarray 12 dargestellt, welches eine Vielzahl von einzelnen Sendern und Empfängern 14 umfasst. Durch das Ultraschallarray 12 wird im ersten Schritt a) des Verfahrens ein Ultraschallpuls 22 ausgesendet. Ultraschallechos der Ultraschallpulse werden anschließend im zweiten Schritt b) des Verfahrens wieder von den Sendern und Empfängern 14 erfasst. Sowohl der Ultraschallpuls 22 als auch die Ultraschallechos 24, 25 lassen sich wie in Figur 3 angedeutet näherungsweise als ebene Welle auffassen.

Die empfangenen Ultraschallechos 24, 25 werden von den Sendern und Empfängern 14 in ein analoges Signal umgesetzt und dem Steuergerät 16 zugeführt. Das Steuergerät 16 umfasst für jeden der Sender und Empfänger 14 einen Analog-Digitalwandler 30. Mit den Analog-Digitalwandlern 30 werden im dritten Schritt c) des Verfahrens die analogen Signale der Sender und Empfänger 14 in digitale Signale 31 umgesetzt.

Im vierten Schritt d) des Verfahrens werden die digitalen Signale 31 mit dem Addierer 32 zu einem Ausgangssignal 38 aufsummiert. Dieses Ausgangssignal 38 wird durch einen Multiplizierer 34 im Schritt e) des Verfahrens mit einer Zufallsmatrix multipliziert, deren Zufallszahlen durch einen Zufallszahlengenerator 36 bereitgestellt werden. Durch Anwendung der Compressed Sensing Methode werden im Schritt f) des Verfahrens aus dem multiplizierten Ausgangssignal 39 die Einfallsrichtungen der Ultraschallechos 24, 25 ermittelt. Gegebenenfalls kann zusätzlich auch ein Beamforming-Algorithmus verwendet werden. In der in Figur 3 dargestellten Ausführungsform wird der Compressed Sensing Algorithmus mithilfe eines digitalen Signalprozessors 40 ausgeführt. In weiteren Ausführungsformen kann der Compressed Sensing Algorithmus genauso wie der Zufallszahlengenerator 36, der Multiplizierer 34 und der Addierer 32 in Form eines Computerprogrammes auf einer Datenverarbeitungsvorrichtung ausgeführt werden. Des Weiteren werden in Schritt f) des Verfahrens die Laufzeiten des Ultraschallpulses und der Ultraschallechos ermittelt, um die Entfernung der reflektierenden Objekte zu berechnen.

Sind Richtung und Entfernung der reflektierenden Objekte bekannt, sind diese in der Umgebung vollständig lokalisiert und werden im letzten Schritt g) des Verfahrens in eine Umgebungskarte 42 eingetragen. Diese Umgebungskarte kann anschließend beispielsweise einem Fahrassistenzsystem zur Verfügung gestellt werden.

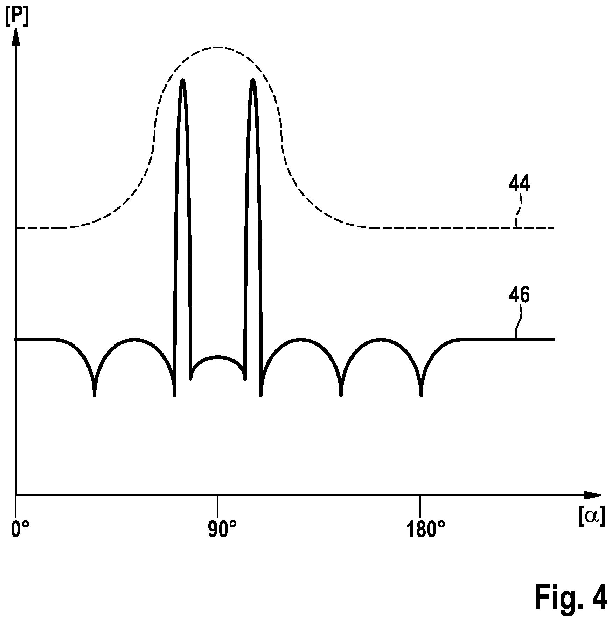

Figur 4 zeigt ein Diagramm welches die Auswertung von Ultraschallechos mittels eines konventionellen Beamforming-Algorithmus und der Compressed Sensing Methode im Vergleich darstellt.

Der Darstellung in Figur 4 können die ermittelten Einfallsrichtungen von zwei Ultraschallechos entnommen werden. Auf der horizontalen Achse $\alpha$ ist der Einfallswinkel aufgetragen, auf der vertikalen Achse P ist die dem jeweiligen Einfallswinkel zugeordnete ermittelte Signalstärke aufgetragen. Der Nullpunkt der horizontalen Achse $\alpha$ entspricht 0° das Maximum der horizontalen Achse entspricht 180°. In der Mitte der horizontalen Achse ist eine Markierung angebracht, die einem 90°-Winkel entspricht. Ein Einfallswinkel von 90° bedeutet hier einen Einfall eines Ultraschallechos senkrecht zum Ultraschallarray. Die gestrichelt dargestellte Linie 44 stellt dabei die Auswertung zweier einfallender Ultraschallechos mithilfe des konventionellen Beamforming-Algorithmus dar, während die durchgezogene Linie 46 das Ergebnis der Anwendung der Compressed Sensing Methode darstellt. Wie man der Figur 4 entnehmen kann, lassen sich mit dem klassischen Beamforming-Algorithmus die beiden Ultraschallechos nicht voneinander trennen. Bei der Auswertung würden diese als ein Hindernis aufgefasst. Mithilfe der Compressed Sensing Methode kann die Auflösung deutlich gesteigert werden. Die Kurve 46 wurde durch Anwenden des $L_1$-SVD-Algorithmus ermittelt und ermöglicht es, die beiden einfallenden Ultraschallechos zu trennen, obwohl beide Ultraschallechos einen Einfallswinkel in der Nähe von 90° aufweisen.

Die Erfindung ist nicht auf die hier beschriebenen Ausführungsbeispiele und deren hervorgehobene Aspekte beschränkt. Vielmehr ist innerhalb des durch die anhängigen Ansprüche angegebenen Bereichs eine Vielzahl von Abwandlungen möglich, die im Rahmen fachmännischen Handelns liegen.

**Patentansprüche**

1. Verfahren zur Lokalisierung von Objekten mittels Ultraschall, folgende Schritte umfassend:

   a) Aussenden mindestens eines Ultraschallpulses (22),
   b) Erfassen von Ultraschallechos (24, 25) des mindestens einen Ultraschallpulses (22) mit mindestens zwei Empfängern (14),
   c) Wandlung der von jedem Empfänger (14) aus den Ultraschallechos (24, 25) erzeugten analogen Signale (28) in digitale Signale (31),
   d) Aufsummieren der digitalen Signale (31) zu einem Ausgangssignal (38),
   e) Multiplizieren des Ausgangssignals (38) mit einer Zufallsmatrix,
   f) Ermitteln der Einfallsrichtung der Ultraschallechos (24, 25) aus dem multiplizierten Ausgangssignal (39) unter Verwendung von Compressed Sensing,
   g) Speichern der ermittelten Einfallsrichtungen in einer Umgebungskarte (42),

   **dadurch gekennzeichnet, dass** bei der Ermittlung der Einfallsrichtung der Ultraschallechos (24, 25) zusätzlich ein Beamforming-Algorithmus verwendet wird.

2. Verfahren gemäß Anspruch 1, **dadurch gekennzeichnet, dass** beim Compressed Sensing der $L_1$-SVD Algorithmus verwendet wird.

3. Verfahren gemäß einem der Ansprüche 1 oder 2, **dadurch gekennzeichnet, dass** als Beamforming-Algorithmus delay-and-sum-filtering, space-time-filtering, minimum variance Beamformer, Capon's Methode und/oder der MUSIC-Algorithmus verwendet wird.

4. Verfahren gemäß einem der Ansprüche 1 bis 3, **dadurch gekennzeichnet, dass** in dem Verfahrensschritt f) zusätzlich die Entfernung von Objekten (20, 21), an denen der mindestens eine Ultraschallpuls (22) reflektiert wurde, durch Messung der Schalllaufzeit ermittelt wird.

5. Verfahren gemäß einem der Ansprüche 1 bis 4, **dadurch gekennzeichnet, dass** die mindestens zwei Empfänger (14) als eindimensionales oder zweidimensionales Array (12) angeordnet sind.

**6.** Verfahren gemäß Anspruch 5, **dadurch gekennzeichnet, dass** das die Empfänger (14) des eindimensionalen oder zweidimensionalen Arrays (12) in zwei oder mehr Gruppen (17, 18) unterteilt sind.

**7.** Vorrichtung zur Durchführung des Verfahrens gemäß einem der Ansprüche 1 bis 6, umfassend mindestens einen Sender (14) zum Aussenden von Ultraschallpulsen (22), mindestens zwei Empfänger (14) zum Empfangen von Ultraschallechos (24, 25) sowie ein Steuergerät (16), wobei die Vorrichtung für jeden Empfänger (14) einen Analog/Digitalwandler (30) umfasst und wobei das Steuergerät (16) zur Ermittlung der Einfallsrichtung der Ultraschallechos (24, 25) mittels Compressed Sensing und zusätzlich mittels eines Beamforming-Algorithmus eingerichtet ist.

**8.** Vorrichtung nach Anspruch 7, **dadurch gekennzeichnet, dass** die mindestens zwei Empfänger (14) als eindimensionales oder zweidimensionales Array (12) angeordnet sind.

**9.** Vorrichtung gemäß Anspruch 7 oder 8, **dadurch gekennzeichnet, dass** das die Empfänger (14) des eindimensionalen oder zweidimensionalen Arrays (12) in zwei oder mehr Gruppen (17, 18) unterteilt sind.

**10.** Vorrichtung gemäß einem der Ansprüche 7 bis 9, **dadurch gekennzeichnet, dass** Sender und Empfänger (14) bauteilidentisch ausgeführt sind.

**Claims**

**1.** Method for localizing objects by means of ultrasound, including the following steps:

a) emitting at least one ultrasonic pulse (22),
b) capturing ultrasonic echoes (24, 25) of the at least one ultrasonic pulse (22) using at least two receivers (14),
c) converting the analogue signals (28) produced from the ultrasonic echoes (24, 25) by each receiver (14) into digital signals (31),
d) summing the digital signals (31) to form an output signal (38),
e) multiplying the output signal (38) by a random number matrix,
f) ascertaining the direction of incidence of the ultrasonic echoes (24, 25) from the multiplied output signal (39) using compressed sensing,
g) storing the ascertained directions of incidence in a surroundings map (42),

**characterized in that** a beamforming algorithm is additionally used when ascertaining the direction of incidence of the ultrasonic echoes (24, 25).

**2.** Method according to Claim 1, **characterized in that** the $L_1$-SVD algorithm is used during the compressed sensing.

**3.** Method according to either of Claims 1 and 2, **characterized in that** delay-and-sum filtering, space-time filtering, a minimum variance beamformer, Capon's method and/or the MUSIC algorithm are used as beam forming algorithm.

**4.** Method according to any one of Claims 1 to 3, **characterized in that** the distance to objects (20, 21) at which the at least one ultrasonic pulse (22) was reflected is additionally ascertained in method step f) by measuring the sound time-of-flight.

**5.** Method according to any one of Claims 1 to 4, **characterized in that** the at least two receivers (14) are arranged in a one-dimensional or two-dimensional array (12) .

**6.** Method according to Claim 5, **characterized in that** the receivers (14) of the one-dimensional or two-dimensional array (12) are subdivided into two or more groups (17, 18).

**7.** Apparatus for carrying out the method according to any one of Claims 1 to 6, comprising at least one transmitter (14) for imaging ultrasonic pulses (22), at least two receivers (14) for receiving ultrasonic echoes (24, 25) and a controller (16), wherein the apparatus comprises an analogue-to-digital converter (30) for each receiver (14) and wherein the controller (16) is configured to ascertain the direction of incidence of the ultrasonic echoes (24, 25) by means of compressed sensing and, additionally, by means of a beamforming algorithm.

**8.** Apparatus according to Claim 7, **characterized in that** the at least two receivers (14) are disposed in a one-dimensional or two-dimensional array (12).

**9.** Apparatus according to Claim 7 or 8, **characterized in that** the receivers (14) of the one-dimensional or two-dimensional array (12) are subdivided into two or more groups (17, 18).

**10.** Apparatus according to any one of Claims 7 to 9, **characterized in that** transmitter and receiver (14) have a component-identical configuration.

**Revendications**

**1.** Procédé de localisation d'objets par ultrasons, comprenant les étapes suivantes :

a) émission d'au moins une impulsion d'ultrasons (22),

b) détection d'échos d'ultrasons (24, 25) de ladite au moins une impulsion d'ultrasons (22), par au moins deux récepteurs (14),

c) conversion des signaux analogiques (28) générés par chaque récepteur (14) à partir des échos d'ultrasons (24, 25), en signaux numériques (31),

d) totalisation des signaux numériques (31) en un signal de sortie (38),

e) multiplication du signal de sortie (38) par une matrice aléatoire,

f) détermination de la direction d'incidence de l'écho d'ultrasons (24, 25), à partir du signal de sortie multiplié (39), en utilisant une détection de compression,

g) mise en mémoire des directions d'incidence déterminées dans une carte de l'environnement (42),

**caractérisé en ce qu'**un algorithme de formation de faisceau est en outre utilisé pour déterminer la direction d'incidence des échos d'ultrasons (24, 25).

2. Procédé selon la revendication 1, **caractérisé en ce que** l'algorithme $L_1$-SVD est utilisé lors de la détection de compression.

3. Procédé selon l'une des revendications 1 ou 2, **caractérisé en ce qu'**en tant qu'algorithme de formation de faisceau, on utilise un filtrage à retard et somme, un filtrage spatio-temporel, un formateur de faisceau à variance minimale, la méthode de Capon et/ou l'algorithme MUSIC.

4. Procédé selon l'une des revendications 1 à 3, **caractérisé en ce que**, lors de l'étape de procédé f), la distance par rapport à des objets (20, 21) sur lesquels ladite au moins une impulsion d'ultrasons (22) a été réfléchie est en outre déterminée en mesurant le temps de propagation du son.

5. Procédé selon l'une des revendications 1 à 4, **caractérisé en ce que** lesdits au moins deux récepteurs (14) sont agencés sous la forme d'un réseau unidimensionnel ou bidimensionnel (12).

6. Procédé selon la revendication 5, **caractérisé en ce que** les récepteurs (14) du réseau unidimensionnel ou bidimensionnel (12) sont répartis en deux groupes ou plus (17, 18).

7. Dispositif destiné à mettre en œuvre le procédé selon l'une des revendications 1 à 6, comprenant au moins un émetteur (14) destiné à émettre des impulsions d'ultrasons (22), au moins deux récepteurs (14) destinés à recevoir des échos d'ultrasons (24, 25), ainsi qu'un appareil de commande (16), dans lequel le dispositif comprend, pour chaque récepteur (14), un convertisseur analogique-numérique (30) et dans lequel l'appareil de commande (16) est conçu pour déterminer la direction d'incidence des échos d'ultrasons (24, 25) au moyen d'une détection de compression ainsi qu'en outre au moyen d'un algorithme de formation de faisceau.

8. Dispositif selon la revendication 7, **caractérisé en ce que** lesdits au moins deux récepteurs (14) sont agencés sous la forme d'un réseau unidimensionnel ou bidimensionnel (12).

9. Dispositif selon la revendication 7 ou 8, **caractérisé en ce que** les récepteurs (14) du réseau unidimensionnel ou bidimensionnel (12) sont répartis en deux groupes ou plus (17, 18).

10. Dispositif selon l'une des revendications 7 à 9, **caractérisé en ce que** l'émetteur et le récepteur (14) sont conçus de manière identique en ce qui concerne les composants.

**21**

**20**

**25**

**24**

**22**

**14**

**12**

**10**

**16**

**Fig. 1**

**Fig. 2a**

**Fig. 2b**

**Fig. 2c**

Fig. 3

EP 2 817 656 B1

Fig. 4

**EP 2 817 656 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004050794 A1
- US 7834795 B
- US 20100265799 A1
- DE 102010027972 A1

**In der Beschreibung aufgeführte Nicht-Patentliteratur**

- **DMITRY M. MALIOUTOV et al.** Sparse Signal Reconstruction Perspective for Source Localization with Sensor Arrays. *IEEE Transactions on Signal Processing,* 2005, vol. 53-8, 3010-3022
- **R. SCHMIDT.** Multiple emitter location and signal parameter estimation. *IEEE Trans. Antennas Propag.,* 1986, vol. 34, 276-280
- **PETRE STOICA et al.** Study of Capon method for array signal processing. *Circuits, Systems, and Signal Processing,* 1995, vol. 14 (6), 749-770
- **ROBERT G. LORENZ.** Robust Minimum Variance Beamforming. *IEEE TRANSACTIONS ON SIGNAL PROCESSING,* 2005, vol. 53, 1684-1696
- Space-time Kalman filter. **NOEL CRESSIE et al.** Encyclopedia of Environmetrics. 2002, vol. 4, 2045-2049
- **MELVIN J. HINICH.** Processing spatially aliasedarrays. *J. Acoust. Soc. Am,* 1978, vol. 64, 792-794